# EUROPÄISCHE PATENTSCHRIFT

(11) **EP 0 816 019 B1**
(45) Veröffentlichungstag und Bekanntmachung des Hinweises auf die Patenterteilung: **29.03.2000**
(21) Anmeldenummer: 97109968.4
(22) Anmeldetag: 18.06.1997
(51) Int. Cl.: B25H 1/16, A47B 9/00

(54) **Arbeitstisch**
Work table
Table de travail

(30) Priorität: 03.07.1996 DE 29611613 U
(43) Veröffentlichungstag der Anmeldung: 07.01.1998
(73) Patentinhaber: Knürr-Mechanik für die Elektronik AG, D-81829 Munchen (DE)
(72) Erfinder: Schmidt, Markus, 57518 Betzdorf (DE); Reiter, Johann, 94424 Arnstorf (DE)
(74) Vertreter: Heim, Hans-Karl, Dipl.-Ing.

(56) Entgegenhaltungen:
- EP-A- 0 177 868
- EP-A- 0 500 187
- DE-A- 3 427 439
- DE-U- 9 301 248

## Beschreibung

Die Erfindung betrifft einen Arbeitstisch, insbesondere für Werkstätten, gemäß dem Oberbegriff des Anspruchs 1.

Aus der DE-U-93 01 248.9 ist ein Arbeitstisch für Büro- und Techniker-Arbeitsplätze bekannt, bei welchem eine auf Tragarmen angeordnete Tischplatte auf Stützenfüßen angeordnet und abgestützt ist. Die Stützenfüße weisen wenigstens ein Vertikalprofil sowie einen bodenseitigen horizontalen Fußausleger auf. Die Vertikalprofile sind mit T-Nuten und mit einem zentralen Innenraum versehen, in welchem ein Innenrohr, welches mit dem zugehörigen Tragarm der Tischplatte verbunden ist, zur Höhenverstellung der Tischplatte über eine Gleitführung vertikal verstellbar ist.

Das Konstruktionskonzept dieses bekannten Arbeitstisches ermöglicht eine variable Gestaltung und beispielsweise die Anordnung mehrerer Arbeitsebenen. Vorteilhaft sind eine nachträgliche Umrüstung mit einem Doppelstützenfuß und einem rückseitigen Fußausleger, wodurch die Stabilität des Arbeitstisches insbesondere für den Einsatz als Techniker-Arbeitsplatz erhöht werden kann.

Als Werkstattmöbel ist dieser bekannte Arbeitstisch nur bedingt einzusetzen, da die notwendige Stabilität nicht in jedem Fall gewährleistet werden kann.

Aus der DE-A-34 27 439 ist eine Tischanordnung mit den Merkmalen des Oberbegriffs des Anspruchs 1 bekannt, welche als Schießpritsche angewendet wird. Die Tischanordnung ist höhenverstellbar und weist eine Tischplatte auf, welche in einen Tragrahmen eingelegt ist. Vordere und rückseitige Stützteile, welche mit dem Tragrahmen verbunden sind und ein nach unten offenes U bilden, werden in einem am Boden aufliegenden U-förmigen Ständer angeordnet, welcher innenseitig offene vertikale Profile zur Aufnahme von sich gegenüberliegenden Stützteilen aufweist. Mit Hilfe einer Klemmvorrichtung werden die Stützteile verspannt und innerhalb eines Langlochs in jedem Ständer höhenverstellt. Die Klemmvorrichtung umfaßt ein Spannglied, gegengleich bewegbare Spannbacken und ein Distanzglied mit zwei Anschlagbacken.

Diese Tischanordnung weist eine relativ aufwendige Konstruktion auf und genügt nicht in jedem Fall den hohen Stabilitätsanforderungen an einen Arbeitstisch im Werkstattbereich.

In der EP-A-0 500 187 ist ein Arbeitstisch mit zwei stirnseitig angeordneten Fußauslegern beschrieben. Auf jedem Fußausleger sind zwei Stützprofile angeordnet, welche identisch ausgebildet sind und motorbetrieben über einen Spindelantrieb teleskopartig höhenverstellt werden können.

Diese Tischanordnung ist ebenfalls nur bedingt in Werkstätten einzusetzen, da die erreichbare Stabilität nicht in einem ausreichenden Maß gewährleistet werden kann.

Der Erfindung liegt die **Aufgabe** zugrunde, einen gattungsgemäßen Arbeitstisch zu schaffen, welcher eine außerordentlich hohe Stabilität aufweist, insbesondere als Werkstattmöbel eingesetzt werden kann und in einer besonders einfachen und kostengünstigen Fertigung aus Stahl herzustellen ist.

Erfindungsgemäß wird die Aufgabe durch die Merkmale des Anspruchs 1 gelöst. Zweckmäßige und vorteilhafte Ausgestaltungen sind Merkmale der abhängigen Ansprüche 2-10 und in der Figurenbeschreibung enthalten.

Die Erfindung basiert auf der Überlegung, eine besonders hohe Stabilität eines Arbeitstisches, welcher einen U-förmigen Träger mit einer nach oben gerichteten Öffnung und ein U-förmiges Gestell mit einer nach unten gerichteten Öffnung aufweist und zur Aufnahme einer Tischplatte ausgebildet ist, dadurch zu erreichen, daß vordere vertikal angeordnete Gestellholme der nach unten offenen Gestelle innerhalb und rückseitige vertikale Gestellholme außenseitig an vertikal ausgerichteten Trägerholmen des U-förmigen Trägers angeordnet und fixierbar sind.

Indem der Arbeitstisch mit einer derartigen Gestell-Träger-Anordnung versehen ist und die vorderen Gestellholme innerhalb der vorderen Trägerholme geführt werden, während die rückseitigen Gestellholme außenseitig und insbesondere unter einer flächenhaften Anlage an den rückseitigen Trägerprofilen geführt und fixiert werden, ist eine außerordentlich stabile Anordnung erreicht. Durch die außenseitige Anordnung der rückseitigen Gestellholme an den rückseitigen Trägerprofilen ist außerdem eine montagefreundliche Befestigung, eine einfache, rasche Höhenverstellung der U-förmigen Gestelle und eine zusätzliche Anordnung von Querprofilen an den rückseitigen Trägerprofilen realisierbar.

Zweckmäßigerweise sind die rückseitigen Gestellholme und die rückseitigen Trägerprofile der U-förmigen Gestelle und der U-förmigen Träger durch Klemmhalterungen fixierbar. Die rückseitigen Trägerprofile und Gestellholme sind dabei derart ausgebildet, daß die Klemmhalterungen stufenlos fixierbar sind, so daß eine Höhenverstellung der nach unten offenen Gestelle und damit einer Tischplatte in nahezu jeder gewünschten Höhe möglich ist.

In einer bevorzugten Ausbildung sind die rückseitigen Trägerprofile als Hohlprofile mit einem U-förmigen oder insbesondere mit einem C-förmigen Querschnitt ausgebildet. Es ist ein zur Frontseite des Arbeitstisches gerichteter Längsschlitz ausgebildet.

Für eine bevorzugte Klemmhalterung ist der Längsschlitz mit nach innen abgewinkelten Befestigungsstegen versehen, wodurch Klemmteile, welche U-förmig ausgebildet und stirnseitig in die Trägerprofile einführbar sind, an den Befestigungsstegen klammerartig anliegen.

Die innerhalb der rückseitigen Trägerprofile geführten Klemmteile weisen wenigstens eine Bohrung zur Sicherung eines Befestigungselementes auf. Bei einer Gewindeschraube als Befestigungselement ist die Bohrung des Klemmteils z.B. mit einem Gewinde versehen.

Das Befestigungselement einer Klemmhalterung kann vorteilhaft über eine frontseitige Öffnung eines rückseitigen Gestellholms eingeführt werden und reicht mit einem Schaft, insbesondere mit einem Gewindeschaft, durch eine Befestigungsöffnung einer Profilwand des rückseitigen Gestellholmes und durch den Längsschlitz des rückseitigen Trägerprofils bis zu der Bohrung des Klemmteils. Eine ungehinderte Betätigung des Befestigungselementes kann auf diese Weise durch die frontseitige Öffnung des Gestellholms erfolgen.

In einer ersten Variante der Klemmhalterung sind die Befestigungsöffnungen in einer an den rückseitigen Trägerprofilen anliegenden Profilwand des rückseitigen Gestellholms ausgebildet.

In einer zweckmäßigen alternativen Ausbildung sind die Befestigungsöffnungen in Querelementen vorgesehen, welche in einer Längsöffnung der an dem Trägerprofil anliegenden Profilwand des rückseitigen Gestellholms verstellbar geführt und fixiert werden können.

Die Querelemente können beispielsweise als flache Querstreben ausgebildet werden, welche nach ihrer Anordnung in der Längsöffnung des rückseitigen Gestellholmes mit der Profilwand fluchten und mit Elementeschenkeln innenseitig an der Profilwand anliegen.

Eine besonders vorteilhafte Klemmhalterung wird erreicht, wenn die Querelemente wenigstens eine Führungsnase aufweisen, welche nach außen abgewinkelt und zum Eingriff in den Längsschlitz des anliegenden rückseitigen Trägerprofils ausgebildet sein kann. Bei einer komplementär zu dem Längsschlitz ausgebildeten Dimensionierung der Führungsnase wird die Positionierung und Verstellbarkeit der Querelemente vorteilhaft verbessert.

Die Querelemente werden stirnseitig in die rückseitigen Gestellholme eingeführt und lagefixiert, beispielsweise verschweißt.

In einer Weiterbildung der Erfindung ist der Arbeitstisch mit über die oberen Querholme der U-förmigen Gestelle reichenden rückseitigen Gestellholmen versehen. Diese nach oben überstehenden rückseitigen Gestellholme liegen zweckmäßigerweise über ihre gesamte Länge an den ebenfalls nach oben überstehenden Trägerprofilen an, wodurch die Stabilität des gesamten Tischsystems weiter erhöht wird.

Zur Befestigung ist wenigstens eine untere und eine obere Klemmhalterung für jede Gestell-Träger-Anordnung vorgesehen.

Eine Stabilitätsverbesserung und gleichzeitig eine weitere Arbeitsebene kann erreicht werden, wenn eine Traverse oberhalb einer Tischplatte, welche eine erste Arbeitsebene bildet, angeordnet und insbesondere an den rückseitigen Trägerprofilen befestigt wird.

Die rückseitige Traverse kann aus einem Hohlprofil hergestellt und an Außenwänden der rückseitigen Trägerprofile lösbar befestigt werden.

Die vorderen Trägerprofile der U-förmigen Träger können prinzipiell aus denselben U- oder C-Profilen wie die rückseitigen Trägerprofile hergestellt werden. In einer vorteilhaften Ausgestaltung weisen die vorderen Trägerprofile jedoch einen quadratischen Querschnitt auf, in denen die einen komplementären Querschnitt aufweisenden vorderen Gestellholme des nach unten offenen U-förmigen Gestells gleitend geführt werden.

Wenn die vorderen Trägerprofile und die vorderen Gestellholme mit vorzugsweise rasterartig ausgebildeten Gewindebohrungen versehen sind, können die U-förmigen Gestelle in der jeweils gewählten Höhe auch im Bereich der vorderen Gestellholme am U-förmigen Träger einfach und sicher befestigt werden.

In einer weiteren Ausgestaltung der Erfindung reichen die rückseitigen Trägerprofile nach oben über die rückseitigen Gestellholme hinaus und ermöglichen die Anordnung und Befestigung von weiteren Arbeitsebenen, Ablagen, Konsolen und dergleichen. Die Befestigung kann dabei mit verkürzten Gestellholmen und den beschriebenen Klemmhalterungen durchgeführt werden. Die verkürzten Gestellholme können beispielweise mit zusätzlichen Adapterelemente zur Aufnahme von beispielsweise einem Ablagebrett, einem Lochraster und dergleichen versehen werden.

Grundsätzlich ist vorgesehen, die nach unten offenen U-förmigen Gestelle und die U-förmigen Träger aus lösbar verbundenen Trägerprofilen und Querprofilen beziehungsweise Gestellholmen und Querholmen herzustellen. Auf diese Weise kann eine kostengünstige Lagerung der Profile und Holme sowie eine den jeweiligen Anwenderwünschen entsprechende Arbeitstischkonstruktion gewährleistet werden.

Die Erfindung wird nachstehend anhand einer Zeichnung weiter erläutert; in dieser zeigen in einer stark schematisierten Darstellung:
- Fig. 1: eine perspektivische Ansicht eines erfindungsgemäßen Arbeitstisches;
- Fig. 2: eine Seitenansicht eines erfindungsgemäßen Arbeitstisches gemäß Figur 1;
- Fig. 3: einen horizontalen Querschnitt durch ein rückseitiges Trägerprofil und einen daran befestigten rückseitigen Gestellholm mit Klemmhalterung gemäß Linien III-III nach Figur 1;
- Fig. 4: eine ausschnittsweise perspektivische Darstellung eines rückseitigen Gestellholms;
- Fig. 5: einen horizontalen Querschnitt durch ein rückseitiges Trägerprofil mit anliegendem alternativ ausgebildeten rückseitigen Gestellholm und einer alternativen Klemmhalterung und
- Fig. 6: eine ausschnittsweise perspektivische Darstellung des alternativ ausgebildeten rückseitigen Gestellholms gemäß Figur 5 mit einem Klemmteil.

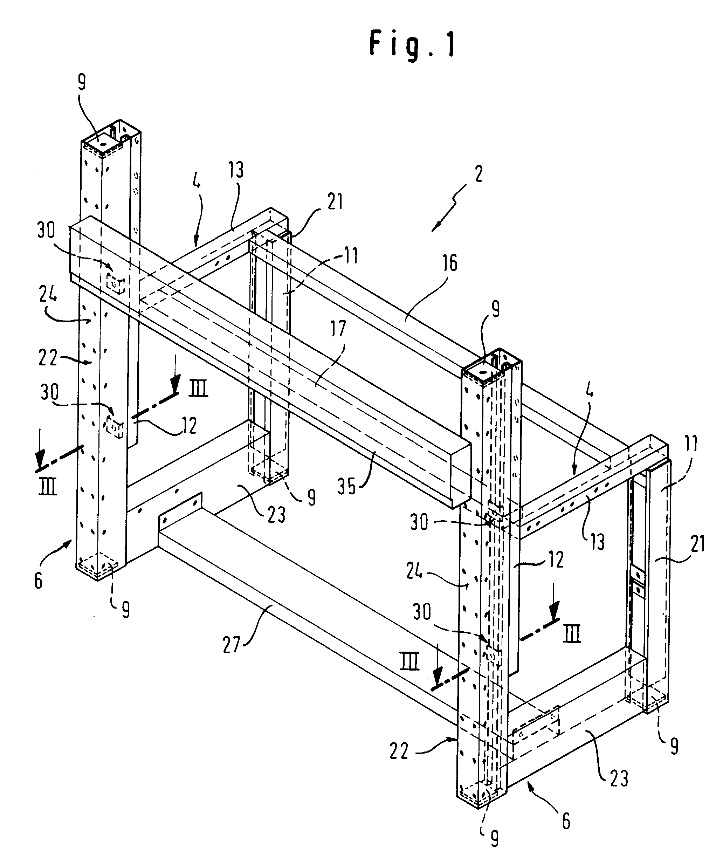

In Figur 1 ist in einer stark schematisierten Darstellung ein erfindungsgemäßer Arbeitstisch gezeigt, welcher eine besonders hohe Stabilität aufweist und deshalb insbesondere als Werkstattmöbel geeignet ist.

Der erfindungsgemäße Arbeitstisch 2 ist aus Stahl gefertigt und besteht aus Profilen, die zu einem nach unten offenen U-förmigen Gestell 4 sowie zu einem nach oben offenen U-förmigen Träger 6 angeordnet und insbesondere lösbar verbunden sind.

Figur 1 verdeutlicht, daß jede Anordnung eines nach unten offenen U-förmigen Gestells 4 und eines nach oben offenen Trägers 6, welcher zur Führung und Fixierung des U-förmigen Gestells 4 ausgebildet ist, in Bereichen von zwei einander gegenüberliegenden und üblicherweise parallelen Seitenkanten einer Tischplatte (nicht dargestellt) vorgesehen ist.

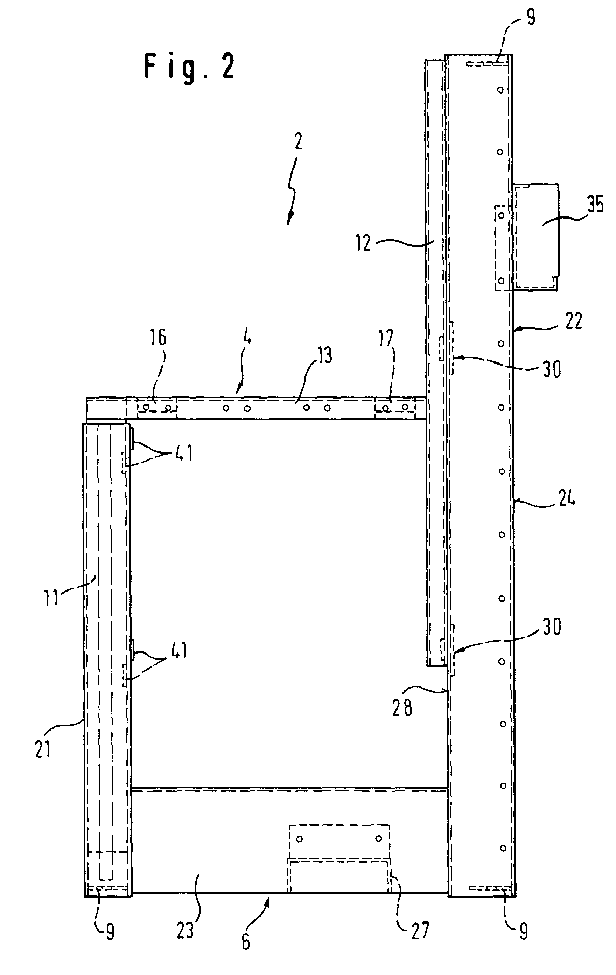

Ein nach unten offenes U-förmiges Gestell 4 besteht in dem in Figur 1 und 2 dargestellten Ausführungsbeispiel eines Arbeitstisches 2 aus einem vorderen Gestellholm 11, der innerhalb eines vorderen Trägerprofils 21 längsverschieblich und gleitend angeordnet ist, einem oberen Querholm 13 und einem rückseitigen Gestellholm 12, welcher außenseitig an einem rückseitigen Trägerprofil 22 anliegt und über wenigstens zwei Klemmhalterungen 30 mit diesem verbunden ist.

Bei dem in Figur 1 und 2 gezeigten Arbeitstisch 2 reichen die rückseitigen Trägerprofile 22 und die daran anliegenden, befestigten rückseitigen Gestellholme 12 über eine erste Tischebene, welche von den vorderen Gestellholmen 11, den oberen Querholmen 13 und von zwei Horizontalholmen 16 gebildet wird, hinaus. Im Bereich der überstehenden Gestellholme 12 und Trägerholme 22 ist eine obere Klemmhalterung 30 vorgesehen.

Die oberen und zweckmäßigerweise auch die unteren Öffnungen der rückseitigen Trägerprofile 22 sowie wenigstens die unteren Öffnungen der vorderen Trägerprofile 21 sind mit Endplatten 9, die insbesondere angeschweißt werden, nahezu verschlossen.

Die oberen Öffnungen der vertikal angeordneten vorderen Trägerprofile 21 sind dagegen von den oberen Querholmen 13 abgedeckt.

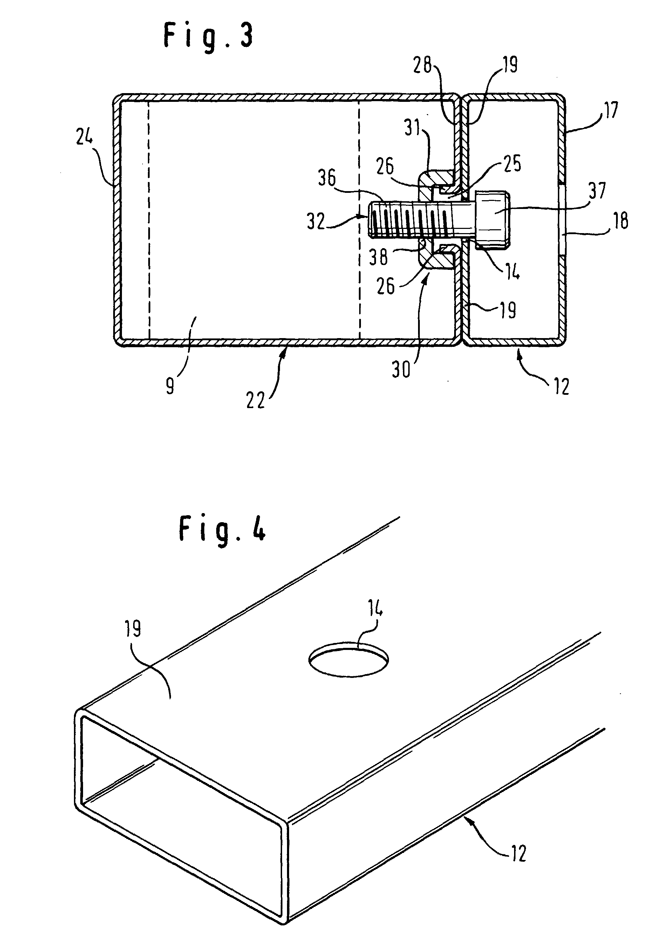

Die vertikalen Gestellholme 11, 12 und der obere Querholm 13 des U-förmigen Gestells 4 sind aus einem Hohlprofil hergestellt. Im vorliegenden Beispiel sind die vorderen Gestellholme 11 als ein quadratisches Hohlprofil ausgebildet, während die rückseitigen Gestellholme 12 einen rechteckigen Querschnitt aufweisen (siehe Figuren 3 bis 6).

Der Arbeitstisch 2 weist oberhalb der oberen Querholme 13 eine Traverse 35 auf, welche an einer Rückwand 24 des rückseitigen Trägerprofils 22 befestigt und insbesondere durch Schraubverbindungen gehalten ist. Diese Traverse 35 kann zur Anordnung und Halterung diversen Zubehörs, z.B. von Aufnahmebehältern, oder auch weiterer Arbeitsebenen dienen.

Im Bereich der unteren Querholme 23 ist wenigstens ein Horizontalprofil 27 angeordnet, welches die parallelen Querholme 23 der U-förmigen Träger 6 miteinander verbindet. Im Bereich dieses Horizontalprofils 27 kann beispielsweise eine Fußablage (nicht dargestellt) angeordnet werden.

Figur 2 veranschaulicht die unterschiedliche Ausbildung der vorderen Trägerprofile 21 und der rückseitigen Trägerprofile 22 des U-förmigen Trägers 6.

Die vorderen Trägerprofile 21 sind als quadratische Hohlprofile ausgebildet und nehmen die komplementär ausgebildeten vorderen Gestellholme 11 gleitend auf. Die rückseitigen Trägerprofile 22 sind im Querschnitt rechteckig ausgebildet.

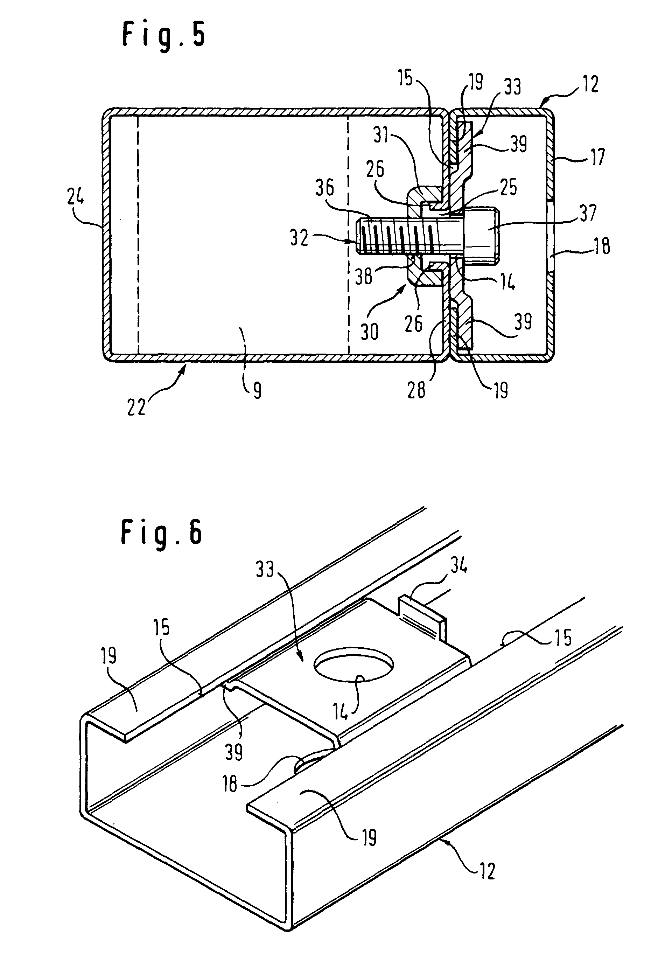

In einer frontseitigen Profilwand 28 der rückseitigen Trägerprofile 22 gemäß Fig. 3 und 5 ist ein Längsschlitz 25 vorgesehen, welcher derart ausgebildet ist, daß mit Hilfe der Klemmhalterungen 30 die außenseitig anliegenden Gestellholme 12 höhenverstellbar geführt und stabil befestigt werden können.

Die Klemmhalterungen 30 werden mit Hilfe von Befestigungselementen 32, insbesondere von Gewindeschrauben, realisiert, welche mit einem Klemmteil 31 zusammenwirken und eine stabile, außenseitige Befestigung eines rückseitigen Gestellholms 12 an einem rückseitigen Trägerprofil 22 bewirken.

Die Klemmteile 31 sind nahezu U-förmig ausgebildet und derart dimensioniert, daß sie an etwa rechtwinklig nach innen abgewinkelten Befestigungsstegen 26 des Längsschlitzes 25 des rückseitigen Trägerprofils 22 anliegen. Die Klemmteile 31, welche die Befestigungstege 26 des Längsschlitzes 25 nahezu klammerartig umgreifen, weisen wenigstens eine Bohrung 38 auf, welche bei Verwendung von Gewindeschrauben als Befestigungselemente 32 als Gewindebohrung ausgebildet ist. Fluchtend mit diesen Bohrungen 38 der Klemmteile 31 sind in einer anliegenden Profilwand 19 und in einer frontseitigen Profilwand 17 des rückseitigen Gestellholms 12 eine Befestigungsöffnung 14 beziehungsweise eine frontseitige Öffnung 18 ausgebildet.

Die frontseitige Öffnung 18 ist derart dimensioniert, daß ein Kopf 37 einer Gewindeschraube 32 durchgesteckt werden kann, während die Befestigungsöffnung 14 lediglich zur Führung des Gewindeschaftes 36 der Befestigungsschraube 32 ausgebildet ist. Die Sicherung des Befestigungselementes 32 erfolgt in der Gewindebohrung 38 des Klemmteils 31.

Figur 4 zeigt als Ausschnitt einen rückseitigen Gestellholm 12, wobei lediglich eine Befestigungsöffnung 14 in der Profilwand 19 dargestellt ist. Eine mit der Befestigungsöffnung 14 fluchtende frontseitige Öffnung 18 ist in der perspektivischen Darstellung nicht sichtbar.

In den Figuren 5 und 6 ist eine alternative Ausbildung der Klemmhalterung 30 gezeigt. Die Konstruktion der rückseitigen Trägerprofile 22, die Anordnung und Ausbildung der Klemmteile 31 und der Befestigungselemente 32 stimmt mit dem Ausführungsbeispiel gemäß Figur 3 und 4 überein.

Der rückseitige Gestellholm 12 weist jedoch anstelle der rasterartig ausgebildeten Befestigungsöffnungen 14 eine Längsöffnung 15, welche schlitzartig ausgebildet ist, auf. In diese Längsöffnung 15 werden zur Realisierung einer Klemmhalterung 30 Querelemente 33 eingeführt und befestigt, beispielsweise verschweißt.

Figur 6 zeigt ein Querelement 33, welches als eine in dem rückseitigen Gestellholm 12 geführten Querstrebe und mit einer Befestigungsöffnung 14 ausgebildet ist. Im Bereich der Befestigungsöffnung 14 ist das Querelement 33 fluchtend zu der von der Längsöffnung 15 geteilten Profilwand 19 ausgebildet. Eine Befestigung, beispielsweise mittels Schweißverbindungen, erfolgt im Bereich der Elementeschenkel 39, welche innenseitig an der Profilwand 19 anliegen.

Die Querelemente 33, welche mindestens eine Befestigungsöffnung 14 aufweisen, sind entlang der Längsöffnung 15 des rückseitigen Gestellholms 12 verschiebbar, so daß die Positionierung der Klemmhalterungen 30 entsprechend den jeweiligen Erfordernissen vorgenommen werden kann. Dabei sind die Querelemente 33 jeweils so zu positionieren und zu befestigen, daß eine Befestigungsöffnung 14 mit einer frontseitigen Öffnung 18 fluchtet.

Die Querelemente 33 sind mit einer nach außen gerichteten Führungsnase 34 versehen, welche in den Längsschlitz 25 des anliegenden rückseitigen Trägerprofils 22 eingreift und formschlüssig darin aufgenommen ist. Auf diese Weise wird die Positionierung der Klemmhalterungen verbessert.

In Figur 3 und in Figur 5 ist die Anordnung einer Endplatte 9 in einem rückseitigen Trägerprofil 22 strichliert dargestellt.

Eine Verbindung der vorderen Gestellholme 11 und der diese aufnehmenden Trägerprofile 21 ist in Figur 2 angedeutet, wobei es sich um Schraub- oder auch um Schweißverbindungen 41 handeln kann. Sowohl Figur 1 als auch Figur 2 verdeutlichen, daß die Trägerprofile 21, 22 und/oder der untere Querholm 23 sowie die Gestellholme 11, 12 und der obere Querholm 13 rasterartige Bohrungen zur Aufnahme von Befestigungselementen, insbesondere von Gewindeschrauben aufweisen.

## Patentansprüche

1. Arbeitstisch, insbesondere für Werkstätten, mit nach unten offenen U-förmigen Gestellen (4), auf denen eine Tischplatte im Bereich ihrer Seitenkanten angeordnet und befestigt ist, und mit U-förmigen Trägern (6), welche zur Aufnahme und Führung der nach unten offenen U-förmigen Gestelle (4) ausgebildet sind, wobei die U-förmigen Gestelle (4) jeweils einen vorderen Gestellholm (11), einen rückseitigen Gestellholm (12) sowie einen oberen Querholm (13) aufweisen und die U-förmigen Träger (6) jeweils mit einem vorderen Trägerprofil (21), einem rückseitigen Trägerprofil (22) sowie einem bodenseitigen Querprofil (23) versehen sind,
dadurch **gekennzeichnet**,
daß die vorderen Gestellholme (11) innerhalb der vorderen Trägerprofile (21) und die rückseitigen Gestellholme (12) außenseitig an den rückseitigen Trägerprofilen (22) geführt und am jeweiligen Trägerprofil getrennt fixierbar sind.

2. Arbeitstisch nach Anspruch 1,
dadurch **gekennzeichnet**,
daß die U-förmigen, nach unten offenen Gestelle (4) höhenverstellbar in den U-förmigen Trägern (6) geführt sind und wenigstens im Bereich ihrer rückseitigen Gestellholme (12) an den rückseitigen Trägerprofilen (22) der U-förmigen Träger (6) durch Klemmhalterungen (30) fixierbar sind.

3. Arbeitstisch nach Anspruch 1 oder 2,
dadurch **gekennzeichnet**,
daß die rückseitigen Trägerprofile (22) des U-förmigen Trägers im Querschnitt als U- oder C-Profile mit einem Längsschlitz (25) ausgebildet sind, in welchem Befestigungselemente (32) unter Klemmung der außenseitig anliegenden rückseitigen Gestellholme (12) der U-förmigen Gestelle (4) stufenlos fixierbar sind und daß in den vorderen Trägerprofilen (21) der U-förmigen Träger (6), welche im Querschnitt quadratisch ausgebildet sind, die vorderen Gestellholme (11) des U-förmigen Gestells (4) gleitend fixierbar sind.

4. Arbeitstisch nach Anspruch 3,
dadurch **gekennzeichnet**,
daß die rückseitigen Trägerprofile (22) jeweils im Bereich des Längsschlitzes (25) Befestigungsstege (26) aufweisen, die nach innen abgewinkelt und zur Fixierung von Klemmteilen (31), welche zur Aufnahme der Befestigungselemente (32) ausgebildet sind, vorgesehen sind.

5. Arbeitstisch nach einem der vorhergehenden Ansprüche,
dadurch **gekennzeichnet**,
daß die rückseitigen Trägerprofile (22) der U-förmigen Träger (6) und die rückseitigen Gestellholme (12) der nach unten offenen U-förmigen Gestelle (4) aneinanderliegen und daß rasterartige Befestigungsöffnungen (14) in den Gestellholmen (12) der U-förmigen Gestelle (4) ausgebildet sind, in welche zur Klemmhalterung der U-förmigen Gestelle (4) Befestigungselemente (32), z.B. Befestigungsschrauben, geführt sind.

6. Arbeitstisch nach Anspruch 5,
dadurch **gekennzeichnet**,
daß die rückseitigen Gestellholme (12) des U-förmigen Gestells (4) als Hohlprofile mit einem rechteckigen oder quadratischen Querschnitt ausgebildet sind und daß die Befestigungselemente (32) durch frontseitige Öffnungen (18), welche mit den Befestigungsöffnungen (14) fluchten, einführbar und betätigbar sind.

7. Arbeitstisch nach einem der Ansprüche 1 bis 4 und 6,
dadurch **gekennzeichnet**,
daß eine Längsöffnung (15) in dem rückseitigen Gestellholm (12) der U-förmigen Gestelle (4) ausgebildet ist, in deren Bereich Querelemente (33) lagefixierbar angeordnet sind, welche die Längsöffnung (15) überbrücken und wenigstens eine Befestigungsöffnung (14) für ein Befestigungselement (32) aufweisen,
daß die Querelemente (33) als flache Querstreben ausgebildet sind und eine Führungsnase (34) aufweisen, welche nach außen gerichtet ist und zum Eingriff in den Längsschlitz (25) des rückseitigen Trägerprofils (22) des U-förmigen Trägers (6) vorgesehen ist.

8. Arbeitstisch nach einem der vorhergehenden Ansprüche,
dadurch **gekennzeichnet**,
daß die U-förmigen Gestelle (4) über den oberen Querholm (13) reichend rückseitige Gestellholme (12) aufweisen, welche über ihre gesamte Länge an den rückseitigen Trägerprofilen (22) anliegen und über wenigstens eine obere und untere Klemmhalterung (30) fixierbar sind,
daß tischplattenseitig Horizontalholme (16, 17) und bodenseitig wenigstens ein Horizontalprofil (27) angeordnet sind, welche die U-förmigen Gestelle (4) bzw. die U-förmigen Träger (6) verbinden.

9. Arbeitstisch nach einem der vorhergehenden Ansprüche,
dadurch **gekennzeichnet**,
daß eine rückseitige Traverse (35) die rückseitigen Trägerprofile (22) oberhalb einer Tischplatte miteinander verbindet und für wenigstens eine zusätzliche Arbeitsebene nutzbar ist und
daß die zusätzlichen Arbeitsebenen oberhalb der Tischplatte mit Hilfe von verkürzt ausgebildeten rückseitigen Vertikalholmen (12) und Klemmhalterungen (30) an den rückseitigen Trägerprofilen (22) fixierbar sind.

10. Arbeitstisch nach einem der vorhergehenen Ansprüche, **dadurch gekennzeichnet,**
daß die nach unten offenen U-förmigen Gestelle (4) und die U-förmigen Träger (6) aus Stahlprofilen gefertigt sind.

## Claims

1. Worktable, particularly for workshops, comprising downwardly open, U-shaped frames (4) on which is positioned and fixed a table plate in the area of its lateral edges, and U-shaped girders (6) which are constructed for reception and guidance of the downwardly open, U-shaped frames (4), each of the U-shaped frames (4) having a front frame spar (11), a rear frame spar (12) as well as an upper transverse spar (13) and each of the U-shaped girders (6) being provided with a front girder section (21), a rear girder section (22) as well as a bottom-side transverse section (23),
**characterized** in that,
the front frame spars (11) are guided inside the front girder sections (21) and the rear frame spars (12) are externally guided on the rear girder sections (22), and are separately fixable to the respective girder section.

2. Worktable according to claim 1,
**characterized** in that,
the U-shaped, downwardly open frames (4) are guided in vertically adjustable manner in the U-shaped girders (6) and at least in the area of their rear frame spars (12) are fixable by clamping holders (30) to the rear girder sections (22) of the U-shaped girders (6).

3. Worktable according to claim 1 or 2,
**characterized** in that,
the rear girder sections (22) of the U-shaped girder are constructed cross-sectionally as U- or C-sections with a longitudinal slot (25), in which can be continuously fixed fastening elements (32), accompanied by clamping of the externally engaging rear frame spars (12) of the U-shaped frames (4), and the front frame girders (11) of the U-shaped frame (4) are slidably held and fixable in the front girder sections (21) of the U-shaped girders (6), which are cross-sectionally square.

4. Worktable according to claim 3,
**characterized** in that,
each of the rear girder sections (22) comprise in the vicinity of the longitudinal slot (25) fastening webs (26), which are bent inwards and are provided for fixing of clamping parts (31) constructed for the reception of the fastening elements (32).

5. Worktable according to one of the preceding claims,
**characterized** in that,
the rear girder sections (22) of the U-shaped girders (6) and the rear frame spars (12) of the downwardly open, U-shaped frames (4) engage with one another, and grid-like fastening openings (14) are formed in the frame spars (12) of the U-shaped frames (4), in which are guided fastening elements (32), e.g. fastening screws, for the clamping retention of the U-shaped frames (4).

6. Worktable according to claim 5,
**characterized** in that,
the rear frame spars (12) of the U-shaped frame (4) are constructed as hollow sections with a rectangular or square cross-section, and the fastening elements (32) can be introduced and operated through frontal openings (18), which are aligned with the fastening openings (14).

7. Worktable according to one of the claims 1 to 4 and 6,
**characterized** in that,
a longitudinal opening (15) is constructed in the rear frame spar (12) of the U-shaped frames (4), in the vicinity of which are arranged in positionally fixed manner transverse elements (33), which bridge the longitudinal opening (15) and have at least one fastening opening (14) for a fastening element (32), the transverse elements (33) are constructed as flat cross-ties and have a guide nose (34), which is directed outwards and is provided for engagement in the longitudinal slot (25) of the rear girder section (22) of the U-shaped girder (6).

8. Worktable according to one of the preceding claims,
**characterized** in that,
the U-shaped frames (4) have rear frame spars (12) extending over the upper transverse spar (13), which engage over their entire length on the rear girder sections (22) and are fixable by means of at least one upper and lower clamping holder (30),
on the table top side are provided horizontal spars (16, 17) and on the bottom side at least one horizontal section (27) and which respectively link the U-shaped frames (4) and the the U-shaped girders (6).

9. Worktable according to one of the preceding claims,
**characterized** in that,
a rear cross member (35) interconnects the rear girder sections (22) above a table plate and is usable for at least one additional working plane, and
the additional working planes above the table plate are fixable to the rear girder sections (22) with the aid of shortened rear vertical spars (12) and clamping holders (30).

10. Worktable according to one of the preceding claims,
**characterized** in that,
the downwardly open, U-shaped frames (4) and the U-shaped girders (6) are made from steel sections.

## Revendications

1. Table de travail, en particulier pour ateliers, avec des bâtis (4) en forme de U ouverts vers le bas sur lesquels est placé et fixé un plateau de table au niveau de ses bords latéraux, et avec des supports (6) en forme de U, qui sont conformés pour recevoir et guider les bâtis (4) en forme de U ouverts vers le bas, les bâtis (4) en forme de U présentant chacun une barre de bâti antérieure (11), une barre de bâti postérieure (12) et une barre transversale supérieure (13) et les supports (6) en forme de U étant munis chacun d'un profilé porteur antérieur (21), d'un profilé porteur arrière (22) et d'un profilé transversal côté fond (23), ***caractérisée en ce que*** les barres de bâti antérieures (11) peuvent être guidées à l'intérieur des profilés porteurs antérieurs (21) et fixées séparément au profilé porteur respectif et les barres de bâti postérieures (12) peuvent être guidées à l'extérieur sur les profilés porteurs postérieurs (22) et fixées séparément au profilé porteur respectif.

2. Table de travail selon la Revendication 1, ***caractérisée en ce que*** les bâtis (4) en U ouverts vers le bas sont guidés dans les supports (6) en U d'une manière réglable en hauteur et peuvent être fixés, au moins au niveau de leurs barres de bâti postérieures (12), aux profilés porteurs postérieurs (22) des supports en U (6) par des fixations de serrage (30).

3. Table de travail selon la Revendication 1 ou 2, ***caractérisée en ce que*** les profilés porteurs postérieurs (22) des supports en U sont conformés en section comme des profilés en C ou en U avec une fente longitudinale (25), dans laquelle des éléments de fixation (32) peuvent être fixés de manière continue avec serrage des barres de bâti postérieures (12) des bâtis en U (4) en appui à l'extérieur, et ***en ce que*** les barres de bâti antérieures (11) des bâtis en U (4) peuvent être fixées dans les profilés porteurs antérieurs (21) des supports en U (6), lesquels sont conformés avec une section carrée.

4. Table de travail selon la Revendication 3, ***caractérisée en ce que*** les profilés porteurs postérieurs (22) présentent chacun, au niveau de la fente longitudinale (25), des talons de fixation (26) qui sont coudés vers l'intérieur et sont prévus pour la fixation de pièces de serrage (31) qui sont formées afin de recevoir les éléments de fixation (32).

5. Table de travail selon l'une quelconque des Revendications précédentes, ***caractérisée en ce que*** les profilés porteurs postérieurs (22) des supports en U (6) et les barres de bâti postérieures (12) des bâtis en U (4) ouverts vers le bas s'appuient les uns sur les autres et ***en ce que*** des ouvertures de fixation (14) de type encliquetage sont formées dans les barres (12) des bâtis en U (4), dans lesquelles passent des éléments de fixation (32), par exemple des vis de fixation, afin d'immobiliser les bâtis en forme de U (4).

6. Table de travail selon la Revendication 5, ***caractérisée en ce que*** les barres de bâti postérieures (12) des bâtis en U (4) sont conformées en profilés creux de section carrée ou rectangulaire, et ***en ce que*** les éléments de fixation (32) peuvent être introduits et actionnés à travers des ouvertures frontales (18) qui sont alignées avec les ouvertures de fixation (14).

7. Table de travail selon l'une quelconque des Revendications 1 à 4 et 6, ***caractérisée en ce qu'***une ouverture longitudinale (15) est formée dans la barre de bâti postérieure (12) des bâtis en U (4), au niveau de laquelle des éléments transversaux (33) sont placés avec une possibilité d'immobilisation, lesquels couvrent l'ouverture longitudinale (15) et présentent au moins une ouverture de fixation (14) pour un élément de fixation (32), ***en ce que*** les éléments transversaux (33) sont conformés en barres transversales plates et présentent un nez de guidage (34) qui est tourné vers l'extérieur et est prévu pour se mettre en prise dans la fente longitudinale (25) du profilé porteur postérieur (22) des supports en U (6).

8. Table de travail selon l'une quelconque des Revendications précédentes, ***caractérisée en ce que*** les bâtis en U (4) présentent des barres de bâti postérieures (12) arrivant au-dessus de la barre transversale supérieure (13), qui s'appuient sur toute leur longueur sur les profilés porteurs postérieurs (22) et peuvent être fixées par au moins une fixation de serrage supérieure et une fixation de serrage inférieure (30), ***en ce que*** des barres horizontales (16, 17) sont placées du côté du plateau et au moins un profil horizontal (27) du côté du fond, qui relient les bâtis en U (4) ou les supports en U (6).

9. Table de travail selon l'une quelconque des Revendications précédentes, ***caractérisée en ce qu'***une traverse postérieure (35) relie entre eux les profilés porteurs (22) au-dessus d'un plateau et est utilisable pour au moins un autre plan de travail, et ***en ce que*** les plans de travail utilisables peuvent être fixés aux profilés porteurs postérieurs (22) au-dessus du plateau à l'aide de barres verticales postérieures (12) raccourcies et de fixations de serrage (30).

10. Table de travail selon l'une quelconque des Revendications précédentes, ***caractérisée en ce que*** les bâtis en U (4) ouverts vers le bas et les supports en U (6) sont fabriqués à partir de profilés d'acier.
